# EUROPEAN PATENT APPLICATION

(11) **EP 3 454 284 A1**
(43) Date of publication of application: **13.03.2019**
(21) Application number: 18201315.1
(22) Date of filing: 17.12.2013
(51) Int. Cl.: G06Q 30/06, G06F 3/048

(54) **OBJECT SELECTION AND PRESENTATION OF OBJECT-RELATED DATA IN ONE CONSISTENT PAGE VIEW**

(30) Priority: 18.12.2012 SE 1251449
(62) Divisional of application: 13865666.5
(71) Applicant: Touchize Sweden AB, 212 22 Malmö (SE)
(72) Inventor: Deleuran Mumm, Stefan, 233 92 Svedala (SE); Gajdos, Tom, 247 51 Dalby (SE)
(74) Representative: Ström & Gulliksson AB

(57) **Abstract**

A communication terminal (100, 200, 500) comprising a memory (240) and a controller (210), wherein said controller (210) is configured to display a graphical representation (510, 520, 570, 575, 576) associated with an item, and receive an input indicating a move of said graphical representation (510, 520, 570, 575, 576) to a displayed acquisition area (530), whereby said item associated with said graphical representation (510, 520, 570, 575, 576) is selected for a purchase.

## Description

### TECHNICAL FIELD

This application relates to a method, an apparatus and a computer program product for presenting object-related data and selecting an object, and in particular to a method, an apparatus and a computer program product for presenting object-related data and selecting an object in one consistent (web) page view.

### BACKGROUND

In today's society many companies and institutions invest in providing electronic commerce, commonly known as e-commerce, ecommerce or e-comm. Electronic commerce refers to the buying and selling of products or services over electronic systems such as the Internet and other computer networks.

However, the online services currently offered are often confusing to a user in that as the user browses the available content of an ecommerce site and/or makes purchases the focus of the web page is constantly changing from one page view to another. The user is presented with pop-up windows that offer little or no interaction or functionality, changing page views that are difficult to backtrack and actions that are impossible to reverse. For example, in many systems a user is unable to easily backtrack from a (virtual) shopping basket in an intuitive manner after having placed an article in the shopping basket without risking adding another item of the same article in the shopping basket.

This is highly confusing to a user in that the user is constantly required to shift focus and try to understand how to navigate to a wanted article, especially if revisiting a previously visited article or an article close to the previously visited article. One consequence is that a user may forget or not be able to get back (without due effort) to an item that he originally wanted to purchase and may thus opt to not purchase the item. It is also difficult to maintain an overview of the user's current position in the online shopping system.

Furthermore, purchasing methods in online stores has traditionally been based on the needs of the shopping system itself, making it an inventory presentation. Such systems are arranged to enable navigation in the online store based on loading a new web page generating a new page view for each step taken by a user thereby navigating further into subcategories of the inventory. In many systems the actual purchase is made from a web page from the last step in the hierarchy, the item itself. The purchase is effected by, optionally selecting variations (such as size or colour) and, clicking on a virtual button indicating that the purchase is accepted, a so-called buy button.

The shopping cart that holds the currently selected items is often not visible and needs to be invoked to display its content generating yet another new page view.

This method has worked on desktop computers, with mouse interaction on the buttons and use of the browsers back button. Now in the new era of touch-enabled devices the above solution works, but is not optimal in that provides a confusing user interface that is difficult to navigate, thus there is a need for improvement.

### SUMMARY

It is an object of the teachings of this application to overcome at least the problems listed above by providing a manner that allows the user to buy the items displayed without being forced deep into a hierarchy and to move to new page views.

It is an object of the teachings of this application to overcome at least the problems listed above by providing a communication terminal comprising a memory and a controller, wherein said controller is configured to display a graphical representation associated with an item, and receive an input indicating a move of said graphical representation to a displayed acquisition area, whereby said item associated with said graphical representation is selected for a purchase.

This allows for a simple manner of effecting a purchase by simply moving a graphical representation of an item to an acquisition area, thereby mimicking a real-life shopping experience.

In one embodiment the controller is further configured to receive an input indicating a selection of said graphical representation and in response thereto display a further graphical representation associated with the same item. The item may be selected for purchase by moving said further graphical representation to the acquisition area.

This allows a user to view information about the item and to purchase it easily without having to backtrack any actions or navigation.

In one embodiment the controller is further configured to receive input referring to a second graphical representation while said further graphical representation is displayed, and in response thereto process said input referring to said second graphical representation. This allows a user to view several items at once for easy comparison.

In one embodiment the controller is further configured to receive an input indicating a move of said graphical representation out of said displayed acquisition area, whereby said item associated with said graphical representation is deselected for said purchase.

In one embodiment the controller is further configured to display a variety image as a further graphical representation wherein said variety image is associated with a variation of said item.

In one embodiment the controller is further configured to select said variation of said item upon receiving an input indicating a move of said variety image to said acquisition area. This allows for a simple and fast selection of a variety of an item for purchase.

In one embodiment the input indicating a move is a drag-and-drop input.

It is also an object of the teachings of this application to overcome the problems listed above by providing a method for use in a communication terminal, said method comprising displaying a graphical representation associated with an item, and receiving an input indicating a move of said graphical representation to a displayed acquisition area, whereby said item associated with said graphical representation is selected for a purchase.

It is also an object of the teachings of this application to overcome the problems listed above by providing a communication terminal comprising a memory and a controller, wherein said controller is configured to display a plurality of graphical representations all associated with a same item, receive an input indicating a move of any of said graphical representations to a displayed acquisition area, whereby the item associated with said plurality of graphical representations is selected for a purchase.

It is also an object of the teachings of this application to overcome the problems listed above by providing a communication terminal comprising a memory and a controller, wherein said controller is configured to display a plurality of graphical representations in a scrollable list, group said plurality of graphical representations into at least a first and a second group, wherein said first group represents a higher logical or hierarchical level and said second group represents a lower logical or hierarchical level, wherein the plurality of graphical representations grouped in the second group are enabled to be manipulated individually and/or as a group when displayed.

This enables an intuitive overview of more than one logical or hierarchical level at one time without requiring navigation through various levels.

In one embodiment the controller is configured to display at least a portion of the plurality of graphical representations grouped in the second group simultaneously.

In one embodiment the controller is configured to display the plurality of graphical representations grouped in the second group at a smaller size than the graphical representations grouped in the first group.

It is also an object of the teachings of this application to overcome the problems listed above by providing a method for use in a communication terminal comprising a memory and a controller, wherein said method comprises displaying a plurality of graphical representations in a scrollable list, grouping said plurality of graphical representations into at least a first and a second group, wherein said first group represents a higher logical or hierarchical level and said second group represents a lower logical or hierarchical level, wherein the plurality of graphical representations grouped in the second group are enabled to be manipulated individually and/or as a group when displayed.

It is also an object of the teachings of this application to overcome the problems listed above by providing a computer program product or computer readable storage medium encoded with instructions that, when executed on a processor, performs the methods according to above.

The authors of the present application have realized, after inventive and insightful reasoning, that by associating an item with several graphical representations all being enabled for manipulation it is possible to provide a dynamic presentation of items for sale and for effecting a purchase of such items in one consistent page view.

The teachings herein find use in various graphical user interfaces that are enabled for user manipulation, especially touch-based manipulation. One such system is an online shopping service.

The prior art act of selecting an item to be put in a virtual shopping basket in a different page view is not intuitive and is not mimicking real life behavior. The proposed manner taught herein provides an intuitive shopping experience that mimics a real-life experience.

Benefits of the teachings herein include, but are not limited to, the user being offered a consistent page view, increased visual communication, a minimum of required actions for effecting a purchase, a highly intuitive online shopping experience, only a minimum of instructions required before using the online shopping service, easy to identify items which may be purchased. In one embodiment, the manner of the teachings here is easily operated in that a purchasable object is easily identifiable - if it is visible, it is offered for sale.

As all items are shown or are available in one and the same page, the number of page loads, and therefore also the bandwidth needed, is reduced significantly.

Furthermore, the present teaching provides for a faster way of getting additional information on an item - also without loading a new page - as well as effecting a purchase.

Also, as only dynamic data needs to be loaded (and no static such as html elements) the bandwidth is kept at a minimum.

The reduced bandwidth needed and the number of page loads being reduced also reduces the power consumption as fewer communicating sessions need be executed.

As would be clear from the detailed description, the efficiency of a system according to the teachings herein in relation to prior art system it is clear that there are both bandwidth and time (energy) savings made.

Also, the handling, presentation and selection of product variants is more efficient than in prior art systems, since no additional selection is necessary, all options (variants) are presented as graphical representations and thus immediately buyable. In prior art systems, the selection of variant attributes has to be made through dropdown lists, checkboxes and similar, before the item is buyable.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The actions of any method disclosed herein do not have to be performed in the exact order disclosed, unless explicitly stated.

### BRIEF DESCRIPTION OF DRAWINGS

The invention will be described in further detail under reference to the accompanying drawings in which:
Figure 1A, 1B, 1C and 1D are each a schematic view of a communication apparatus according to an embodiment of the teachings herein;
Figure 2 is a schematic view of the components of a communication apparatus according to the teachings herein;
Figure 3 is a schematic view of a computer-readable medium according to the teachings herein;
Figure 4 shows general view of a system according to one embodiment of the teachings of this application;
Figures 5A, 5B, 5C, 5D, 5E and 5F each shows a schematic view of a user interface view according to one embodiment of the teachings of this application;
Figures 6A and 6B each shows a schematic view of a user interface view according to one embodiment of the teachings of this application;
Figure 7 shows a schematic view of a graphical presentation of objects in a list according to one embodiment of the teachings of this application;
Figure 8 shows a flowchart for a method according to one embodiment of the teachings of this application; and
Figure 9 shows a flowchart for a method according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

In one embodiment a communication apparatus is configured for network communication, either wireless or wired. In one embodiment the communication apparatus is configured for network communication, both wireless and wired. Examples of such a communication apparatus are: a personal computer, desktop or laptop, a tablet computer, a mobile telephone, a smart phone, a personal digital assistant and a work station. The communication apparatus may be exemplified and described as being a computer. The personal computer or terminal comprises a display and a housing. The housing comprises a controller or CPU and one or more computer-readable storage mediums, such as storage units and internal memory. Examples of storage units are disk drives or hard drives. The terminal further comprises at least one data port. Data ports can be wired and/or wireless. Examples of data ports are USB (Universal Serial Bus) ports, Ethernet ports or Wi-Fi (according to IEEE standard 802.11) ports. Data ports are configured to enable a terminal to connect with other terminals or a server.

The terminal further comprises at least one input unit such as a keyboard. Other examples of input units are computer mouse, touch pads, touch screens or joysticks to name a few.

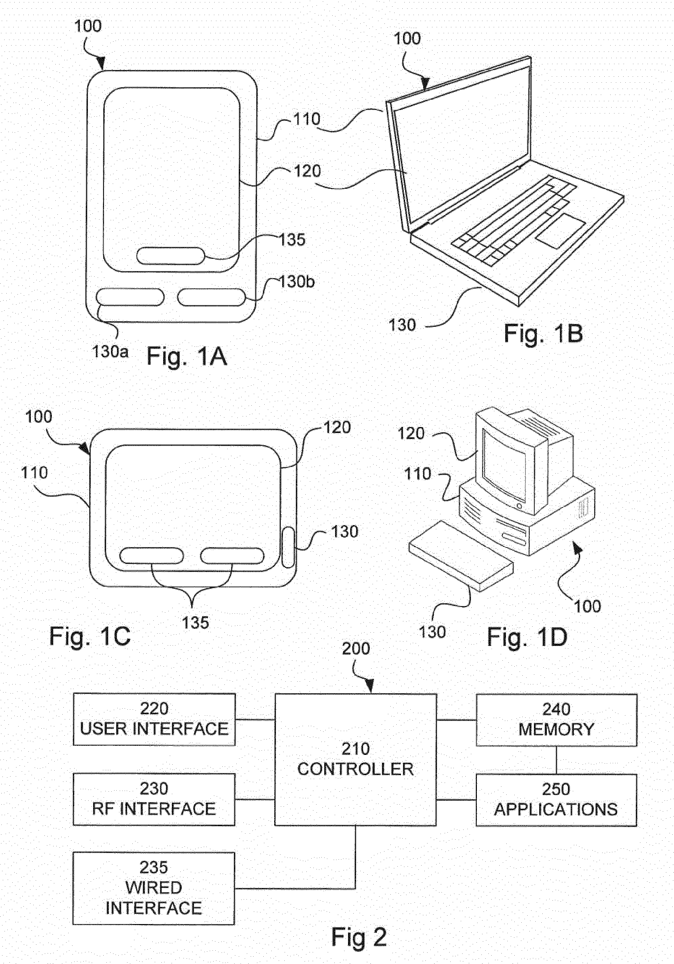

Figures 1A, 1B, 1C and 1D generally show each a communication apparatus 100 according to an embodiment herein. Examples of such a communication apparatus 100 are: a personal computer, desktop or laptop, a tablet computer, a mobile telephone, a smart phone, a personal digital assistant, sets arranged for television viewing with internet capabilities, virtual glasses, communication apparatus arranged for camera control and other communication apparatus configured for internet communication. Four embodiments will be exemplified and described as being a mobile telephone, such as a smartphone, in figure 1A, a laptop computer in figure 1B, a tablet computer in figure 1C and a desktop computer or terminal 100 in figure 1D.

Referring to figure 1A a smartphone 100 comprises a housing 110 in which a display 120 is arranged. In one embodiment the display 120 is a touch display. In other embodiments the display 120 is a non-touch display. Furthermore, the smartphone 100 comprises two keys 130a, 130b. In this embodiment there are two keys 130, but any number of keys is possible and depends on the design of the smartphone 100. In one embodiment the smartphone 100 is configured to display and operate a virtual key 135 on the touch display 120. It should be noted that the number of virtual keys 135 are dependent on the design of the smartphone 100 and an application that is executed on the smartphone 100.

Referring to figure 1B a computer 100, in this example a laptop computer 100, comprises a display 120 and a housing 110. In one embodiment the display 120 is a touch display. The housing comprises a controller or CPU (not shown) and one or more computer-readable storage mediums (not shown), such as storage units and internal memory. Examples of storage units are disk drives or hard drives. The laptop computer 100 further comprises at least one data port. Data ports can be wired and/or wireless. Examples of data ports are USB (Universal Serial Bus) ports, Ethernet ports or WiFi (according to IEEE standard 802.11) ports. Data ports are configured to enable the laptop computer 100 to connect with other communication apparatuses or a server. The laptop computer 100 further comprises at least one input unit such as a keyboard 130. Other examples of input units are computer mouse, touch pads, touch screens, eye control, voice control, camera control or joysticks to name a few.

Referring to figure 1C a tablet computer 100 comprises a housing 110 in which a display 120 is arranged. In one embodiment the display 120 is a touch display. In other embodiments the display 120 is a non-touch display. Furthermore, the tablet computer 100 may comprise one or more keys 130. In this embodiment there is one key 130, but any number of keys is possible and depends on the design of the tablet computer 100. In one embodiment the tablet computer 100 is configured to display and operate one or more virtual keys 135 on the touch display 120. It should be noted that the number of virtual keys 135 are dependent on the design of the tablet computer 100 and an application that is executed on the tablet computer 100.Referring to figure 1D a desktop terminal 100, in this example a desktop computer 100, comprises a display 120 and a housing 110. The housing comprises a controller or CPU (not shown) and one or more computer-readable storage mediums (not shown), such as storage units and internal memory. Examples of storage units are disk drives or hard drives. The desktop computer 100 further comprises at least one data port. Data ports can be wired and/or wireless. Examples of data ports are USB (Universal Serial Bus) ports, Ethernet ports or WiFi (according to IEEE standard 802.11) ports. Data ports are configured to enable the desktop computer 100 to connect with other communication apparatuses or a server. The desktop computer 100 further comprises at least one input unit such as a keyboard 130. Other examples of input units are computer mouse, touch pads, digital pens or joysticks to name a few.

It should be noted that a desktop computer may be used to implement a server, such as a web server. In such an embodiment the server may have a remote input unit 130 and/or a remote display 110 that is shared among other servers, or it is accessed only via its radio interface or its wired interface. The input unit and/or a display are then the input unit and/or a remote display of the accessing terminal.

In one embodiment the communication apparatus, for example the ones of figures 1A, 1B, 1C and 1D, may also comprise eye control, voice control, haptic control, kinetic control, camera control, accelerator control or other input systems.Figure 2 shows a schematic view of the general structure of a communication apparatus according to figures 1A, 1B, 1C and 1D. The communication apparatus 200 comprises a controller 210 which is responsible for the overall operation of the communication apparatus 200 and is preferably implemented by any commercially available CPU ("Central Processing Unit"), DSP ("Digital Signal Processor") or any other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the communication apparatus 200. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The communication apparatus 200 further comprises one or more applications 250. The applications are sets of instructions that when executed by the controller 210 control the operation of the communication apparatus 200. The memory 240 is used for various purposes by the controller 210, one of them being for storing application data and program instructions 250 for various software modules in the communication apparatus 200. The software modules include a real-time operating system, drivers for a man-machine interface 220, an application handler as well as various applications 250. The applications 250 can include a messaging application such as electronic mail, a browsing application, a media player application, as well as various other applications 250, such as applications for voice calling, video calling, document reading and/or document editing, an instant messaging application, a calendar application, a control panel application, one or more video games, a notepad application, etc.

The communication apparatus 200 further comprises a user interface 220, which in the communication apparatus 100 of figure of 1A, 1B, 1C or 1D, is comprised of the display 110, the keypad 130. The user interface (UI) 220 also includes one or more hardware controllers, which together with the UI drivers cooperate with the display 110, keypad 130, as well as various other I/O devices such as sound system, LED indicator, etc. As is commonly known, the user may operate the communication apparatus 200 through the man-machine interface thus formed. As has been disclosed in relation to figure 1D, if the communication apparatus is a server, the user interface may be remote.

The communication apparatus 200 further comprises a radio frequency interface 230, which is adapted to allow the communication apparatus to communicate with other devices through a radio frequency band through the use of different radio frequency technologies. Examples of such technologies are WIFI, Bluetooth®, W-CDMA, GSM, UTRAN, LTE, and NMT to name a few.

The communication apparatus 200 may further comprise a wired interface 235, which is adapted to allow the communication apparatus to communicate with other devices through the use of different network technologies. Examples of such technologies are USB, Ethernet, and Local Area Network, TCP/IP (Transport Control Protocol/Internet Protocol) to name a few.

The controller 210 is configured to operably execute applications 250 such as the web browsing or email application through the RF interface 230 and/or the wired interface 235 using software stored in the memory 240 which software includes various modules, protocol stacks, drivers, etc. to provide communication services (such as transport, network and connectivity) for the RF interface 230 and the wired interface 235, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc.

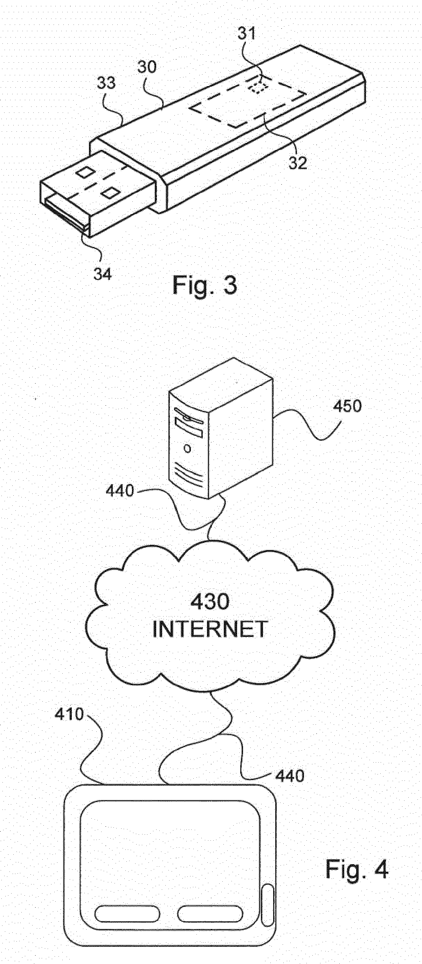

Figure 3 shows a schematic view of a computer-readable medium 32 as described in the above. The computer-readable medium 32 is in this embodiment housed in a memory stick 30, such as a Universal Serial Bus (USB) stick. The USB stick 30 comprises a housing 33 having an interface, such as a connector 34, and a memory chip 32. In this embodiment the memory chip 32 is a flash memory, that is, a non-volatile data storage that can be electrically erased and re-programmed. The memory chip 32 is programmed with instructions 31 that when loaded (possibly via the interface 440) into a controller, such as a processor, executes a method or procedure according to the embodiments disclosed above. The USB stick is arranged to be connected to and read by a reading device, such as a communication apparatus 100, 200 according to figures 1 and 2, for loading the instructions into the controller (referenced 210 in figure 2). It should be noted that a computer-readable medium can also be other mediums such as compact discs, digital video discs, hard drives or other memory technologies commonly used. The instructions can also be downloaded from the computer-readable medium via a wireless interface to be loaded into the controller.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Figure 4 shows a schematic overview of a computer network 400 according to an embodiment herein. A first communication apparatus 410, such as the tablet computer 100 of figure 1C, is connected via the internet 430 to at least one server 450. In figure 4 only one server 450 is shown, but it should be noted that any number of servers 450 may be implemented in a computer network 400. Generally a server is a physical computer (a hardware system) dedicated to running one or more services (as a host), to serve the needs of customers of the other computers or communication apparatus 410 in the network 400. The server is, in this example, a server for an online store, but may also be a server enabling a media selection service (such as a video or music streaming service). A server may be implemented as a computer such as has been disclosed above with reference to figures 1D and 2. Generally, a server 450 can refer to either hardware (a computer) or software (a computer application) that helps to deliver content that can be accessed through the Internet 430.

The Internet 430 is a global system of interconnected computer networks that use the standard Internet protocol suite (TCP/IP - Transmission Control protocol/Internet Protocol) to serve billions of customers worldwide. It is a network of networks that consists of millions of private, public, academic, business, and government networks, of local to global scope, that are linked by a broad array of electronic, wireless and optical networking technologies. The Internet carries a vast range of information resources and services, such as the inter-linked hypertext documents of the World Wide Web (WWW) and the infrastructure to support communication applications such as email and Voice over Internet Protocol (VoIP) to name a few. The communications infrastructure of the Internet 430 consists of its hardware components; such as servers and communication apparatuses and a system of software layers arranged in protocols according to an internet model that control various aspects of the architecture. The most prominent component of the Internet model is the Internet Protocol (IP), which provides addressing systems (IP addresses) for computers on the Internet. As would be apparent to a skilled reader, the internet is full of possibilities and variations of how to connect two communication apparatuses and the embodiments disclosed herein are for purely exemplary purposes and should not be construed to be limiting.

It should be noted that, even though the teachings herein are given through exemplifying embodiments focusing on using a touch-based user interface such as the touch display 120 of the tablet computer 100, the teachings herein may also be implemented on a non-touch user interface where for example swiping actions are replaced by navigation control manipulation (such as scroll keys or arrow keys - not explicitly shown, but well-known).

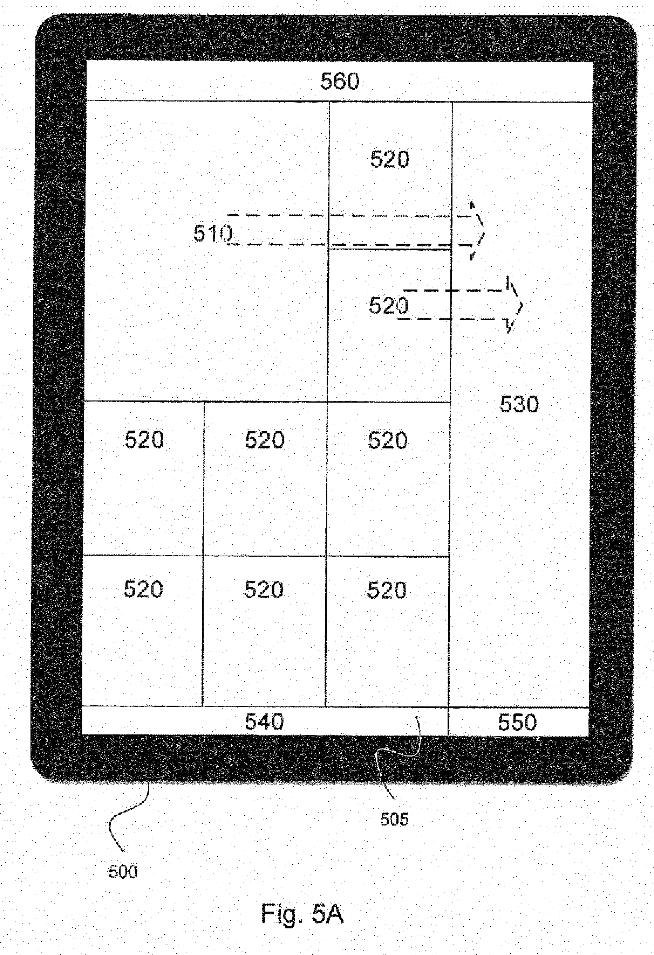

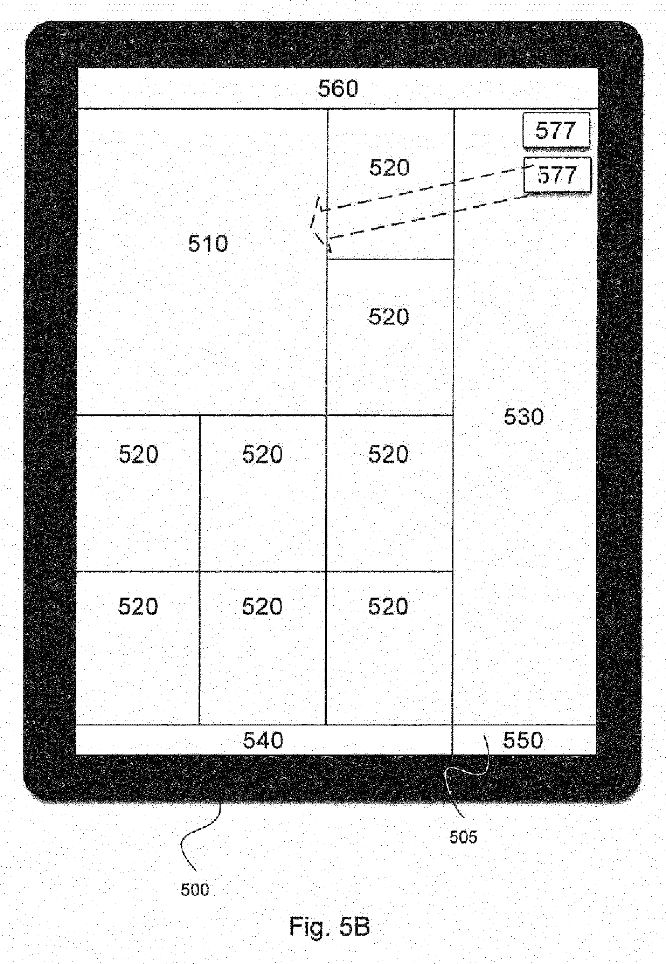

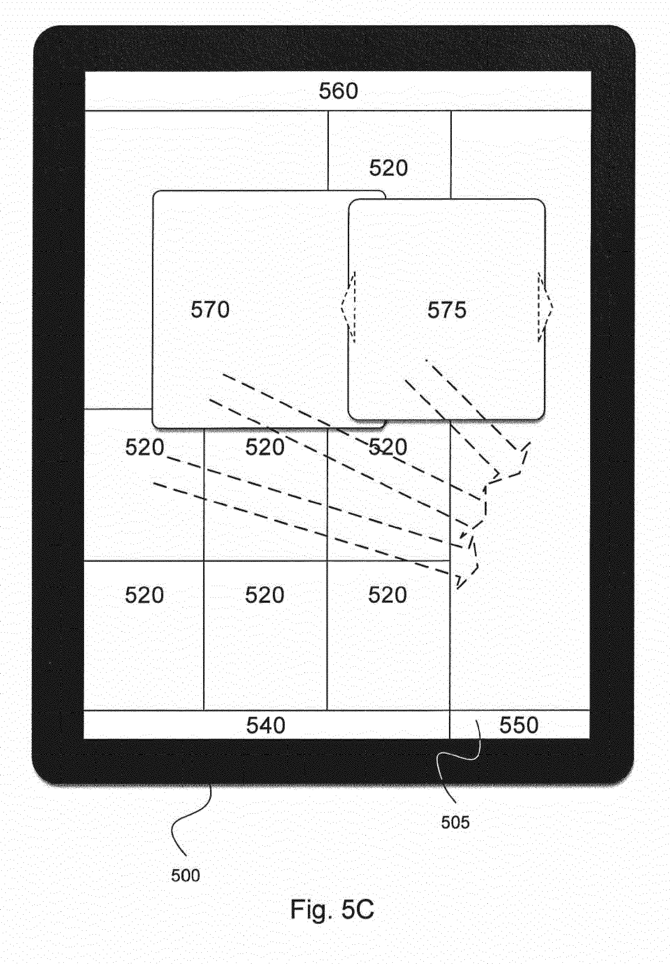

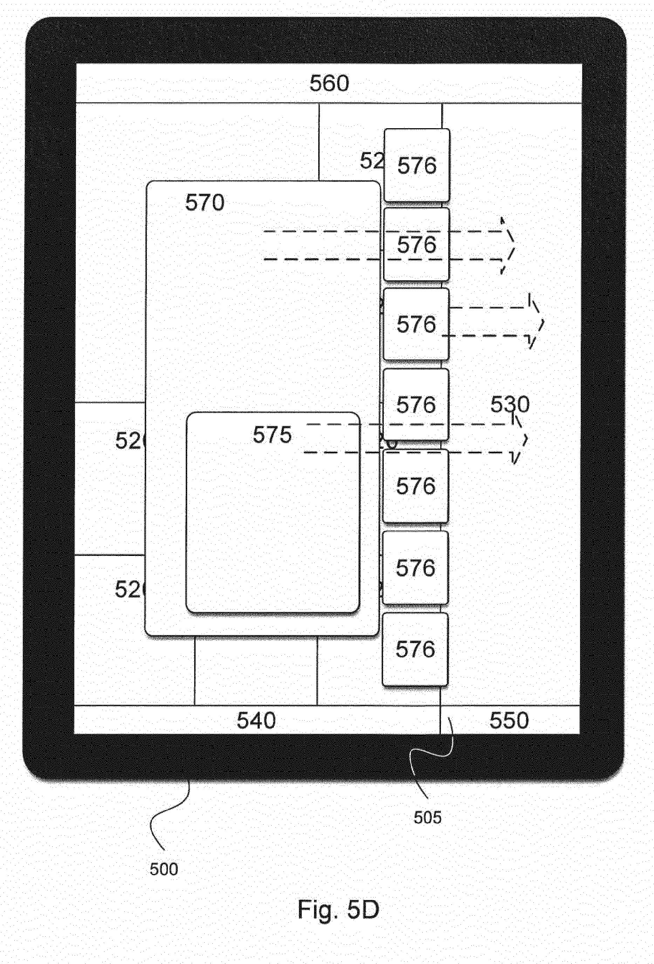

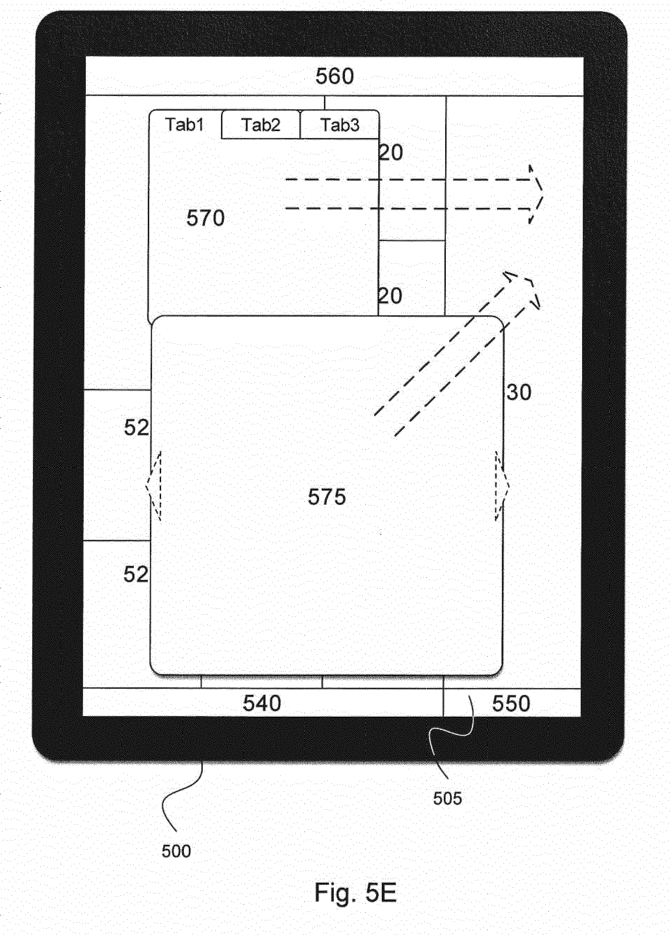

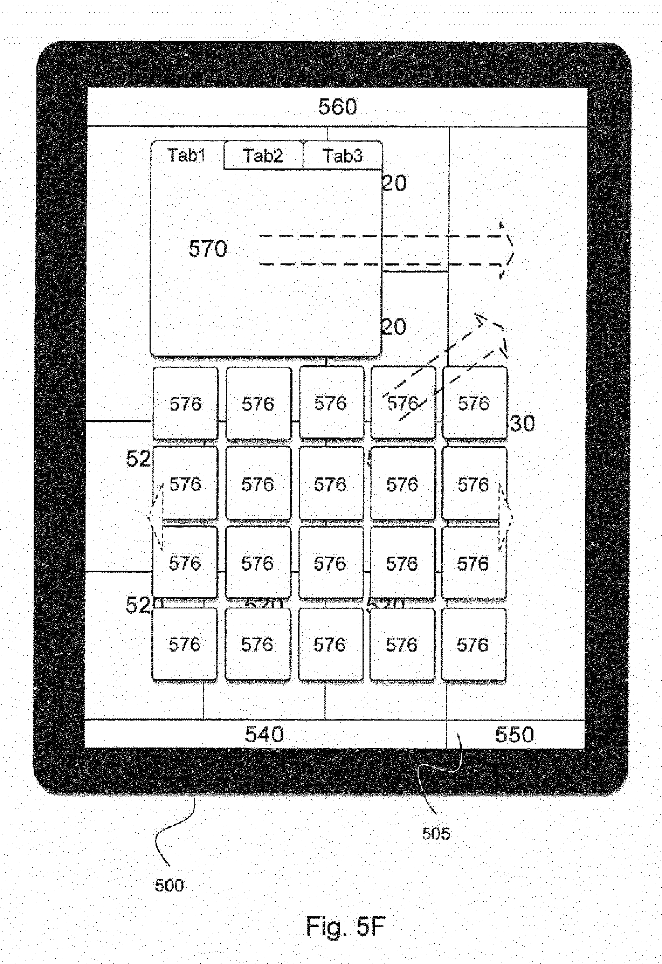

Figures 5A, 5B, 5C, 5D, 5E and 5F each shows a schematic view of a user interface view according to one embodiment of the teachings of this application. The views shown represent various instances of a user interface according to the teachings herein.

Figure 5A shows a communication terminal 500, in this example a tablet computer, having a touch display on which a user interface view 505 is displayed. As part of the user interface view 505 a number of graphical representations 510, 520 of objects relating to for example items that are offered for sale, are displayed. In the example embodiment of figure 5A there is one enlarged representation 510 and eight (8) representations 520 of a smaller size.

The use of enlarged representations 510 enables for an intuitive grouping of objects in that the enlarged representation 510 may, for example, represent an object related to a main item (for example a camera) and the smaller representations 520 represent objects related to accessories to the main item (in the example of the camera the accessories may be tripods, lenses, straps, filters, etc).

The enlarged representation 510 may, for example, alternatively or additionally represent an object related to a special offer, such as a sales offer.

The enlarged representation 510 may, for example, alternatively or additionally represent an object related to an item the seller wants to draw the attention of the user to.

An acquisition area 530, also referred to as a (virtual) shopping basket is also displayed. In the example embodiment of figure 5A the shopping basket 530 is displayed along the right side of the communication terminal 500 and the graphical representations of objects 510, 520 are displayed to the left of the user interface view 505. This provides for a flow of articles from left to right which is perceived to be a logical flow at least for customers accustomed to reading from left to right.

In one embodiment the acquisition area 530 is arranged to be displayed as a user moves a graphical representation to a pre-specified portion of the display. In one example embodiment the acquisition area 530 may be slid in from the right side of the display as a graphical object is moved to the right side of the display. The moving of a graphical representation will be discussed in further detail below. In one embodiment the acquisition area 530 is displayed as long as the user is browsing for items.

A benefit in having an acquisition area being part of a browsing area window is that no additional page load is needed for bringing up the acquisition area (or shopping basket) which reduces the bandwidth needed.

In the example of figure 5A a Go To Payment Area 550 is displayed below the shopping basket 530. In one embodiment the Go To Payment Area 550 may be displayed as a virtual button (referenced 135 in figures 1A and 1C) or an icon (not explicitly displayed). Effecting the Go to Payment Area 550 will cause the product(s) associated with the object(s) in the shopping basket or acquisition area 530 to be purchased, possibly by initiating a payment process.

How such purchases may be effected through input of credit card details or through other payment schemes is well-known to a skilled person and will not be discussed in further detail herein.

Also part of the user interface view 505 is a filed for Product Category Navigation 540 where information on the presently browsed main category of products (such as clothes, photographic equipment or such) may be displayed to offer guidance to a user and a general communication area 560 for displaying company brand, crumb trail, search result and search field or other data.

Even though the example of figure 5A only shows 9 graphical representations 510, 520 it should be noted that more graphical representations may be part of the user interface view 505. Possibly, all graphical representations are not displayed at once on the user interface view 505 but may be scrollable, for example using a two-finger scroll - requiring two fingers to touch the touch display to differentiate from a drag-and-drop action which in this example require only one finger touch.

An object may be selected for purchase by moving any graphical representation 510, 520 associated with the object to the acquisition area 530. This is indicated in figure 5A by the dashed arrows. As a graphical representation 510, 520 is moved to the acquisition area the controller (not shown in figure 5, but referenced 210 in figure 2) is configured to generate a copy of the object and display a graphical representation 577 of the copy of object in the acquisition area 530, see figure 5B.

One benefit of generating one copy for an item as it is selected is that it provides a simple manner of displaying many items.

Alternatively, one object is generated by the controller for each available item and grouped and displayed represented by one graphical representation 510, 520 for all objects of the same kind in the user interface view 505. An object is selected for purchase in the same manner as when generating a copy. One benefit of generating one copy for all available items is that it provides an intuitive manner of displaying the availability of the item, especially useful when purchasing several items of the same article.

The manner of moving the graphical representation 510, 520 associated with an object representing an item mimics the procedure of moving an item from a shelf to a shopping basket and is, as such, highly intuitive to use for a user.

In one embodiment the controller is configured to differentiate between a drag or move action of a graphical representation from a scrolling action, by determining an angle for a continuous moving touch input (i.e. a finger being moved over the touch display). If the angle indicates a movement to a side (i.e. the angle close to 0 or 180 degrees, or alternatively, the angle is far from 90 or 270 degrees) the input is determined to be a move action of a graphical representation. Similarly, if the angle indicates a movement up or down (i.e. the angle close to 90 or 270 degrees, or alternatively, the angle is far from 0 or 180 degrees) the input is determined to be a scroll action. Also, the controller may also be configured to determine that no selectable graphical representation is identifiable close to an initial touch point, and if so determine that the input is a scrolling action. This has the benefit of distinguishing between a scroll action and a move action without requiring multitouch input capabilities. In fact, the manner disclosed above may also be implemented without touch input, using for example a mouse input controlling a cursor.

If the same item already exists with identical metadata, a counter on the graphical representation 577 in the acquisition area 530 indicating the number of similar acquired items may be displayed.

As an item copy is added to or removed from the acquisition area 530, the total sum, tax, and shipping (if any) is recalculated and possibly displayed.

To regret a purchase, the graphical representation of the copy 577 in the acquisition area 530 may simply be moved out of the acquisition area 530, as is indicated by the dashed arrow. By highlighting the graphical representation of the copy 577 it may be indicated to a user when and/or where the item can be dropped to be removed from the shopping basket. In one embodiment the graphical representation of the copy 577 can be dropped anywhere outside the acquisition area 530 and is then removed from the acquisition area/shopping basket 530. If several items with the same meta data are in the acquisition area 530, a figure indicating the number of items is reduced by 1 for each removal action. This can be repeated until the last item copy is removed from the acquisition area 530. When the last item copy in the acquisition area 530 is removed the graphical representation of the copy 577 is no longer displayed in the acquisition area 530.

An object (and the associated item) may be selected by for example tapping on the associated graphical representation 510, 520. Alternatively a graphical representation 510, 520 may be selected by double-tapping on it. As a selected graphical representation 510, 520 selected, the user interface view 505 is arranged to display an information area 570 for presenting information related to the object. This is shown in figure 5C. The information area 570 may be presented as a modal overlay, a popup or a slide-in window. The selection of an object indicates a transition to a lower level in the hierarchy, which transition is achieved without changing the page view or by making a transition in the user interface view 505.

The information relating to the object may be item variations (size, colour, varieties, etc), information related to user actions (such as previous purchases indicating a bonus level or a special offer - buy 2 get 1), item related information (such as a description of the item), et.c..As is indicated by the dashed arrows in figure 5C the information area 570, which is associated with the same object as the graphical representation 510, 520 that was selected, may also be moved to the acquisition area 530 to effect a purchase of the associated item. This provides an intuitive link to a real-life example as it is possible to put an item in a shopping basket irrespective of which side of the item the shopper is currently viewing.

The information area 570 may be tabulated to offer multiple views for different metadata in the same page view (see figures 5E and 5F where the information area 570 is tabulated into three tabs Tab1, Tab2 and Tab3).

Alternatively and/or additionally, the information area 570 may comprise a static portion which is not selectable or movable and is only for presenting the user with information.

In one embodiment the user interface view 505 is also arranged to display an image 575 associated with the object. In the example of figure 5C only one image 575 is displayed, but the image 575 may be scrollable to display other images as is indicated by the dashed triangular arrows. Such triangular arrows are not necessarily displayed in user interface view 505, but may be displayed to offer user guidance or to function as scrolling icons for example in a non-touch based user interface. The image 575 is a graphical presentation that is also associated with the object representing the item, and may as such also be moved to the acquisition area 530 to indicate a purchase.

Alternatively and/or additionally, the information area 570 and the image 575 may form a graphical representation pair which is strongly coupled and which may comprise a static portion, which is not selectable or movable and is only for presenting the user with information, and a movable portion, which is selectable and movable. In one such embodiment the information area 570 comprises the static portion and the image 575 comprises the movable area.

An item may exist or be available in several variations. Variations may be size, colour, or other parameters (for example, a pair of jeans may be offered in different varieties relating to the colour, size (both waist and in-seam length) and washing method.).

To enable a user to efficiently select a wanted variation a variety image 576 may also be displayed in the user interface view 505, see figure 5D. In the example of figure 5D seven (7) variety images 576 are displayed. If a large number of variety images 576 are to be displayed they may be arranged in a scrollable list. The variety images 576 are also graphical representations associated with the object representing the item and, as such, may be moved to the acquisition area 530 to indicate a purchase. The variety images 576 are furthermore associated with a variation of the represented item and moving a variety image 576 to the acquisition area 530 indicates a purchase of the item and of the specific variety associated with the variety image 576.

In one embodiment, the controller (210) of the tablet computer 500 is configured to determine if an object which is placed in the acquisition area 530 represents an item having varieties and if a variety has been indicated, and, if not, display corresponding variety image(s) 576 for user selection.

Figure 5E shows an alternative manner of displaying the item image(s) 575. In this embodiment the item image 575 displayed is scrollable (as is indicated by the dashed triangular arrows, which may or may not be displayed as for the dashed triangular arrows of figure 5C) to display further item images 575 (not explicitly shown). In one embodiment the controller is configured to arrange also at least one item variety image 576 in the same display list as the item image(s) 575 even though the item variety images 576 represent a lower (hierarchical) level for the associated object.

In one embodiment, the item variety image(s) 576 may be displayed as is shown in figure 5F where twenty (20) variety images 576 are shown. The variety images 576 may be individually manipulated, for example selected by tapping on them and/or individually moved to the acquisition area 530 (as indicated by the dashed area), or collectively scrolled to present either a new collection of variety images 576 or an item image 575 and/or collectively moved to the acquisition area 530 through a two-finger touch. här

This provides a simple and intuitive manner of presenting a mixture of graphical representations for objects belonging to different abstraction or logical levels.

By generating objects representing an item, and associating this object with another object representing an aspect of the item, wherein the objects has a graphical representation, and by enabling the graphical representation to be displayed as a fully manipulative entity in the user interface view 505 it is possible to maintain a consistent page view that is able to present all aspects of an item without having to change page, open new (static) windows, or otherwise lose focus.

For example, using the teachings herein a user may select a first graphical representation 510, 520 relating to a first item and open an information area 570 and an image 575 for that item, scroll down the user interface view 505 and select a second graphical representation 510, 520 and potentially open a second information area 570 for that item as well without having to close or cancel any display or action. This allows the user to compare the items easily, without having to navigate back and forth, selecting and reselecting, or by applying a specialized comparison function.

Also both items may be purchased by dragging one of their corresponding or associated graphical representation 510, 520, 570, 575, 576 to the acquisition area 530, possibly simultaneously using a multitouch-based user interface.

In the example embodiments disclosed in the above, the objects associated with the item and the various graphical representation 510, 520, 570, 575, 576 are represented as objects that are displayed on the display and are arranged to be manipulated, possibly independently of one another. By objectifying the items and handling graphical representations of the objects, the teachings herein provides a manner of providing data and information to a user in one consistent page view. In this page view a user can easily back-track from even the deepest level of an item hierarchy without difficulty, simply by cancelling or deleting information areas 570.

In one embodiment all graphical representations 510, 520, 570, 575, 576 displayed are displayed in the same logical layer and as such are all selectable at the same time. A user is thus not required to close a displayed graphical representation 510, 520, 570, 575, 576 to access another graphical representation 510, 520, 570, 575, 576, but the other graphical representation 510, 520, 570, 575, 576 may be selected by simply touching it. In one embodiment the recommended graphical representation 510, 520, 570, 575, 576 may be highlighted, or similarly, the not recommended graphical representation 510, 520, 570, 575, 576 may be dimmed, to indicate which graphical representation 510, 520, 570, 575, 576 the user should select next. In the example of figure 5F for example, the graphical representation 510, 520 are dimmed where as the graphical representations representing the information area 570, the image 575 and the variety image(s) 576 are displayed normally or highlighted. This provides for an intuitive user guidance in a consistent page view.

To further the user guidance some graphical representation 510, 520, 570, 575, 576 may be inactivated (temporarily) to safe guard against accidental selection and to ensure that an action is the actual action wanted by requiring the user to cancel an ongoing operation explicitly before changing to another operation.

For example, should the user currently be viewing an information area 570 for one graphical representation 510, 520 and the user touches another graphical representation 510, 520, the controller may ignore the touch on the other graphical representation 510, 520 until the information area 570 has been closed (cancelled) if the controller is configured to inactivate graphical representation 510, 520 that are not selected or associated with a selected graphical representation 510, 520.

Alternatively, a graphical representation 570, 575, 576 may be closed if an input is received outside of the graphical representation 570, 575, 576 or an associated graphical representation 570, 575, 576.

Such embodiments provide for a consistent page view in which the user is offered a view of available items, is able to perform actions on said available items and all without changing views, shifting another logical level or completely changing page.

It should be noted that the graphical representations may be represented in the software by an object which is associated with the object related to the item. The various graphical representations are still associated with the same item (and the object related to it) albeit through an implicit association. This is a design choice and as such not decisive for the scope of the teachings herein.

In accordance with one embodiment, acquiring an item is performed by simply touching and dragging the corresponding graphical representation 510, 520, 570, 575, 576 to the acquisition area 530, thereby mimicking real life shopping. As has been discussed above, when graphical representation 510, 520, 570, 575, 576 is touched a copy is generated. The copy is then dragged to the acquisition area 530 thereby avoiding holes in the item presentation list 510, 520 displayed. When the graphical representation 510, 520, 570, 575, 576 is dragged, the acquisition area 530 may be highlighted to indicate that it is a droppable area. When the graphical representation 510, 520, 570, 575, 576 is above the droppable acquisition area 530, the acquisition area 530 may be highlighted in a different manner indicating that it can be dropped there. When dropped on the acquisition area 530 the graphical representation 510, 520, 570, 575, 576 is animated into its place in the acquisition area 530.

The manner taught and disclosed with reference to figures 5A-5F provides a benefit in that the acquisition area is always visible, thereby providing the user with both a clear overview of its current purchases as well as an easy manner of making further purchases even from a top level view of a shops hierarchy. A user simply has to drag-and-drop the graphical representation 510, 520 of an item to the acquisition area to purchase it without having to change views back and forth or to try and find his way back to the last position viewed.

Returning to figure 5B, the graphical representation of the copy 577 is also associated with the item and is of course selectable. If the graphical representation of the copy 577 is selected the information area 570, possibly an image 575 and any variety images 576 will be displayed for example in a similar manner as in figure 5D, possibly with the chosen variation indicated by the corresponding variety image 576 being highlighted or displayed as within the acquisition area 530 (not shown). This provides a user to with the possibility of selecting further variations or to regret one variation and switch to another variation, by simply moving the corresponding graphical representations out of the acquisition area 530.

This increases direct or spontaneous shopping as the shopping operation is simplified and requires a minimum of actions.

In one embodiment the controller is further configured to display further graphical representations of items related to the selected item in the information area 570. The further graphical representations are also selectable in the information area 570 and may be purchased directly by being selected and dragged from the information area 570 to the acquisition area 530.

This reduces page loads as no new page is needed to be loaded to show related items.

It should be noted that even though the description above is focused on presenting meta data and other information through graphical representations of objects, such data may also or alternatively be shown with drop-down lists, bullet lists or other common manner of presenting options for selection. It should also be noted that any combination of graphical representations 570, 575, 576 and drop-down lists, bullet lists etc is also possible.

Also other objects may be displayed through selectable graphical representations. For example an object associated with an offer (buy a package deal, buy 2 for 1, etc) may be presented to a user by displaying a graphical representation (not shown) which is selectable for providing additional information. All graphical representations associated with the object related to the offer may be moved to the acquisition area 530 to indicate that the offer is accepted.

It should be noted that graphical representations 510, 520, 575, 576, 577 are able to be dragged, but the area outside the graphical representations 510, 520, 575, 576, 577 is used to enable scrolling the list of graphical representations 510, 520, 575, 576, 577.

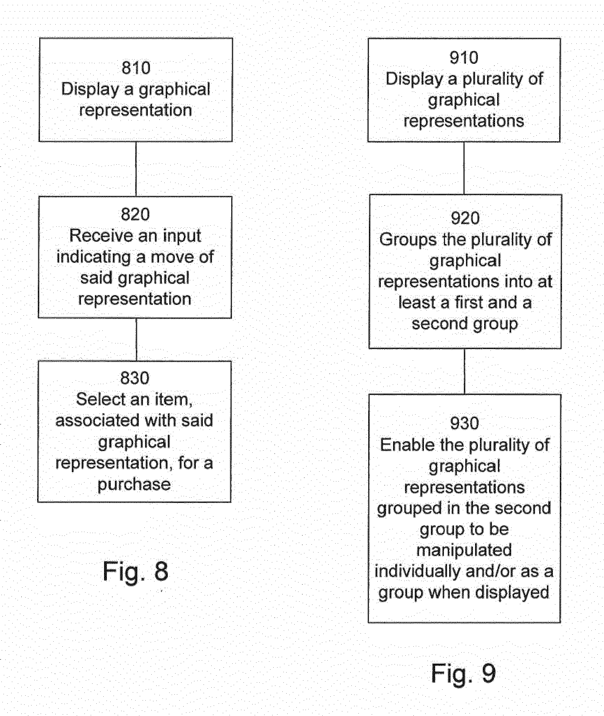

Figure 8 shows a flowchart for a general method according to one embodiment of the teachings of this application.

A mobile communication terminal 100, 200, 500 displays 810 a graphical representation 510, 520, 570, 575, 576 associated with an item, and receives 820 an input indicating a move of said graphical representation 510, 520, 570, 575, 576 to a displayed acquisition area 530. The item associated with said graphical representation 510, 520, 570, 575, 576 is thereby selected 830 for a purchase.In data terminals, such as communication terminals 100, 200 arranged to store data in a memory 240, there exist a problem in prior art data terminals when presenting the data to a user. The data is usually arranged in different logical levels, possibly through a grouping of files and folders. For media data such as music files, the data may be arranged as an album or an individual song or possibly as a folder for an artist which folder contains a folder each for every album which album folder in turn comprises a file for each song.

Prior art systems are arranged to present the data structure to a user by simply presenting all items (folder or file) at a current level, possibly indicating that an item comprises further items, such as a folder is indicated to contain more files by indicating a graphical representation of the file(s) on the graphical representation of the folder. One such example is when a folder containing picture files are shown to contain picture files by overlaying minimized versions of one or several of the picture files on the folder graphical representation. To access these files the user has to open the folder, thereby entering a different logical level. To go to another folder on the same logical level as the folder containing picture files, the user has to back track from the picture files and then scroll to the next folder.

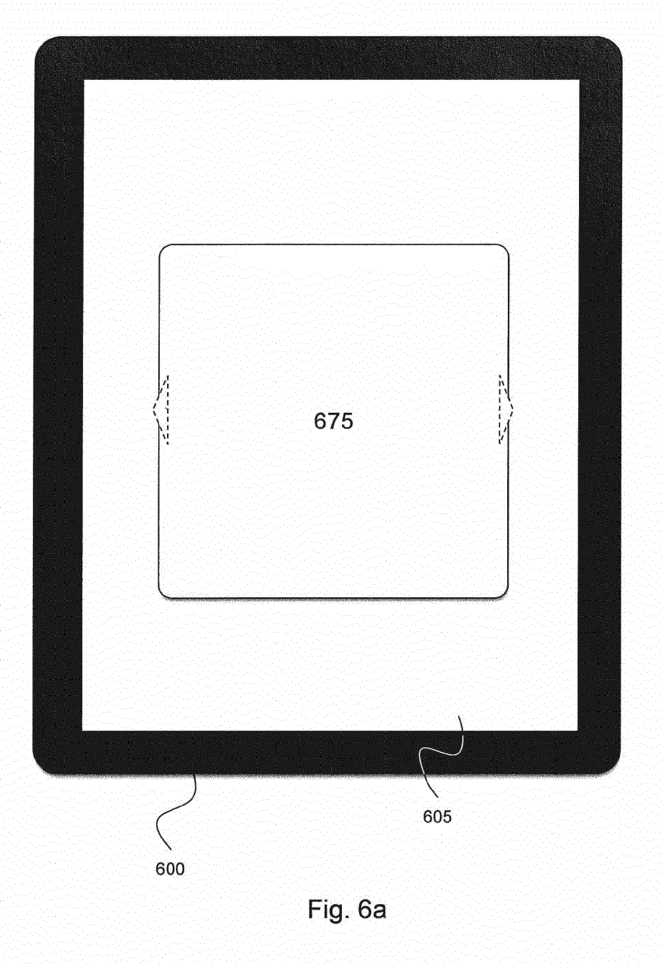

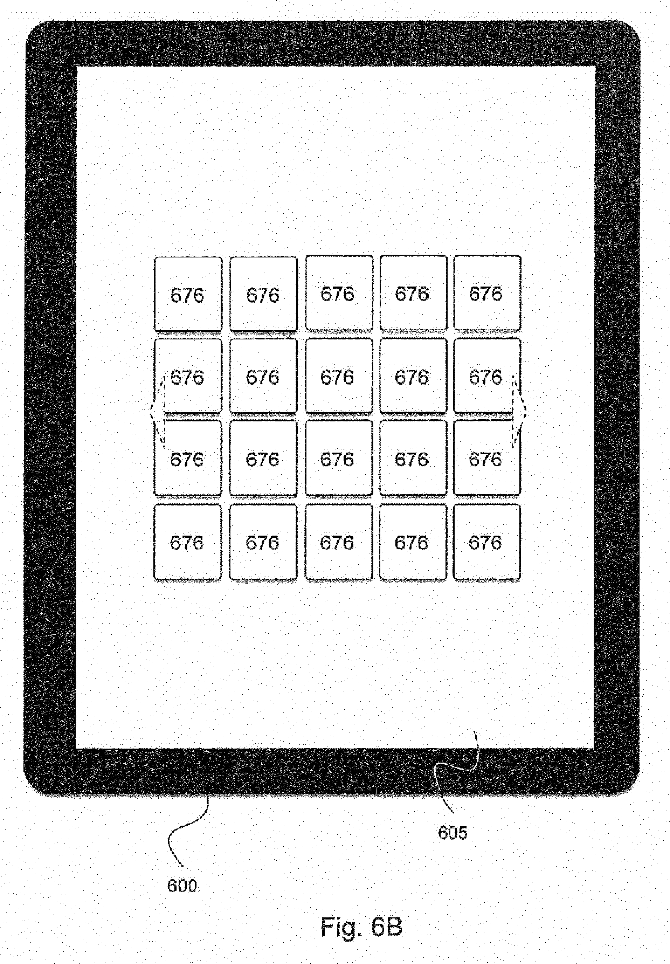

To overcome this cumbersome form of presenting and navigating through files or other objects belonging to different logical or hierarchical levels, a new manner is shown in figures 6A and 6B. Figures 6A and 6B each shows a schematic view of a user interface view according to one embodiment of the teachings of this application;

Figure 6A shows a computing terminal 600, such as a communication terminal for example a tablet computer 100 of figure 1C. A user interface view 605 is displayed comprising a list of graphical representations 675 of files (or other data). The list is scrollable as is indicated by the triangular dashed arrows. In the example of figure 6A only one graphical representation 675 is shown, but it should be noted that any number of graphical representations 675 may be displayed and the number depends on the size of the user interface view 605 and the size of the graphical representations 675. As a user indicates a scrolling action (possibly through a swipe on the touch display - referenced 120 in figure 1C) the controller (referenced 210 in figure 2) is configured to scroll to a next item in the list and display the corresponding graphical representation 675.

According to one embodiment objects of different hierarchical or logical levels may be combined in the scrollable list for easy selection. To indicate to a user that an item is of a lower hierarchical or logical level such items are grouped and displayed with graphical representations 676 having a smaller size, see figure 6B. In the grouping of smaller graphical representations 676 each individual graphical representation 676 is selectable for manipulation on its own. The group of graphical representations 676 is also selectable for manipulation collectively as a group or as a whole.

In one embodiment, a touch input on an individual graphical representation 676, wherein the touch input is clearly on an individual graphical representation 676 selects the item related to the individual graphical representation 676, whereas an indistinct touch input selects the group for manipulation. For example, a long press or double tap on an individual graphical representation 676 selects the individual graphical representation 676, whereas a swiping action or a single tap selects the group of graphical representations 676.

In one embodiment, a single touch input on an individual graphical representation 676 selects the item related to the individual graphical representation 676, whereas a two finger touch input selects the group for (collective) manipulation.

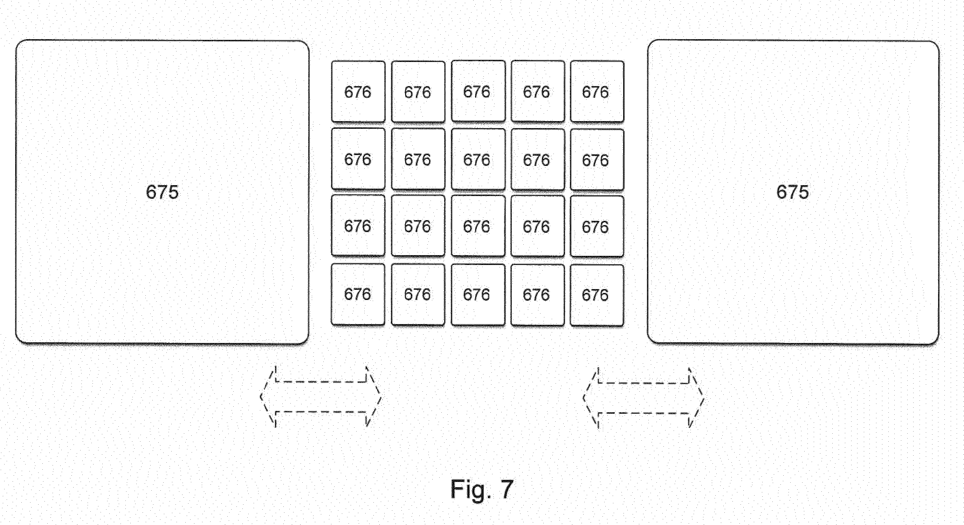

Figure 7 shows a schematic view of a graphical presentation of objects in a list according to one embodiment of the teachings of this application. In figure 7 it is clearly shown that the graphical representations 675 and 676 may be intermixed in a scrollable list.

Although figures 6A, 6B and 7 only show two different levels, it should be noted that the teachings herein are also applicable to more levels, where items of a level are grouped. In one embodiment the upper - or currently visited level - is presented one item at a time. In one embodiment the size of the graphical representation of a lower level item is based on the level that the item belongs to. In one embodiment the size of the graphical representation of a lower level item is based on the number of items (associated with one another) in the lower level. In one embodiment the size of the graphical representation of a lower level item is based on the level that the item belongs to and based on the number of items (associated with one another) in the lower level.

In one example for music files a first level indicates an artist, a middle level indicates an album of an artist, and a lower level indicates individual songs. The scrollable list could then be constructed so that each artist is scrolled one at a time, followed by one group of all the albums, followed by one group of all the tracks. Selecting an album would, in one embodiment, cause the user interface to display the group of individual songs associated with the album, possibly by scrolling to the group of individual songs associated with the album in the scrollable list. As the number of individual songs would probably be rather large, the group of individual songs may be sub divided into sub groups.

The controller (210) is thus configured to group items according to a logical or hierarchical level and to display the different groups in one consistent list. In one embodiment the groups' hierarchical or logical level is indicated by the size of the graphical representation of the items in that group.

The controller (210) is further configured receive a first input type for manipulating the group, and a second input type for manipulating an individual item in a group. For example, a tap selects an individual item, a swipe scrolls to the next group to be displayed, a double tap opens a whole group. As would be clear to a skilled person, many variations of the actual first and second types of input may vary and many combinations are possible, which are all within the scope of the teachings of this application.

This provides a manner that is intuitive to use and enables an improved manner of presenting data at different logical or hierarchical levels in one consistent page view without requiring additional display space and which does not require navigating the hierarchical or logical levels.

Some examples of files with a hierarchical structure which benefit from a presentation and selection manner as taught herein are: music files and music albums or pictures and picture albums.

Figure 9 shows a flowchart for a method according to one embodiment of the teachings of this application.

A communication terminal 100, 200, 500, 600 displays 910 a plurality of graphical representations 575, 576, 675, 676 in a scrollable list. The communication terminal groups 920 the plurality of graphical representations 575, 576, 675, 676 into at least a first and a second group, wherein said first group represents a higher logical or hierarchical level and said second group represents a lower logical or hierarchical level, wherein the plurality of graphical representations 575, 576, 675, 676 grouped in the second group are enabled 930 to be manipulated individually and/or as a group when displayed.

In one embodiment, a selectable graphical representation for an item is defined as a part of an image. The part of the image is associated with an item and as the part of the image is selected (or touched) a corresponding object representing the item is generated and a graphical representation of the object is placed at the touch point for further manipulation.

This allows for inclusion of articles and goods (and services) to be selected to be displayed as part of an image, which has great benefit for presenting selling campaigns and such and also for effecting a purchase form a selling campaign or such as a user can select items directly from an advertisement picture. This reduces the number of user actions and also page loads needed to complete a purchase.

In one embodiment, objects in or parts of a video stream or file are associated with an item and as an object or part of a video is touched a corresponding object representing the item is generated and a graphical representation is placed at the touch point for further manipulation.

In one embodiment the controller is configured to display a search area (not shown). If the controller detects that a graphical representation is being moved to the search area, the controller will perform a search for items that are similar to the item being represented by the graphical representation being moved to the search area. An item may be determined to be similar if it has matching meta data or other data associated with the item as the item being moved to the search area, i.e. the search item.

An item may also be determined to be similar if it has visual properties that are similar to the item to be searched. This provides for a fast and intuitive manner of searching for similar items that requires a minimum of manual manipulation or operation and is executable without any text input.

Similarly, the controller may be configured to detect that a graphical representation for a first item is being moved on top of a graphical representation for a second item, and in response thereto display a comparison of the first and the second item listing the data or information associated with the first and the second item so that a user can easily compare two items with a minimum of manipulation and also without presenting any comparison options - either statically or as an option associated with an item.

In one embodiment the controller is configured to receive a range indication, such as a filtering range based on properties such as price, size, model or make or other property associated with an item, and in response thereto order a list of items based on the received range indication and display the whole list, but where a current focus is moved to the first item having a property falling within the range indication. The items having a property falling within the range indication may be presented as being highlighted in some manner distinguishing them from the items not having a property falling within the range indication.

This has a benefit of faster sorting and also for enabling a user to see the alternatives that are close to falling within the range indication as they will be the items displayed right outside the focus. Also, no new load of data is needed.

One benefit of the teachings herein is that a user is able to maintain an overview of his navigation and past actions. A user is further provided with an intuitive manner of effecting purchases that mimic a real-life shopping experience.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A communication terminal (100, 200, 500) comprising a memory (240) and a controller (210), wherein said controller (210) is configured to:
display a graphical representation (510, 520, 570, 575, 576) associated with an object representing a first item available for purchase,
receive a touch input indicating a selection of said graphical representation (510, 520) and in response thereto display a further graphical representation (570, 575, 576) associated with the same object,
wherein said further graphical representation (510, 520, 570, 575, 576) is displayed in a same page view as said graphical representations, thereby avoiding a further page load;
receive a drag-and drop input indicating a move of any of said graphical representation (510, 520) and said further graphical representation (570, 575, 576) to a displayed acquisition area (530), and
whereby the item associated by the object associated with said graphical representation and said further graphical representation (510, 520, 570, 575, 576) is selected for a purchase,
wherein said controller (210) is further configured to:
determine if an object representing an item that has been moved to said acquisition area (530) is associated with a variation, wherein the variation is a variation in size and/or colour, and if it is determined that the object is associated with an variation, determine if a variation for said item has been selected for purchase, and
if it is determined that no variation has been selected for said object, display at least one variety image (576) as a further graphical representation (576) associated with a variation of said item represented by the object for selection of a variation,
wherein said controller (210) is further configured to select said variation of said item representing said object upon receiving an input indicating a move of said variety image (576) to said acquisition area (530),
and wherein the selection and movement of said variation of said item effects a purchase of the associated item.

2. The communication terminal according to claim 1, wherein at least one graphical representation associated with an object representing an item is selectable, and wherein a selectable graphical representation for an item is defined as a part of an image, wherein the part of the image is associated with an item and as the part of the image is selected a corresponding object representing the item is generated and selectable for purchase.

3. The communication terminal according to claim 1 or 2, wherein an object is associated with an offer presented to a user by displaying at least one graphical representation which is selectable for providing additional information, and wherein the at least one graphical representation associated with the object related to the offer is movable to the acquisition area (530) to indicate that the offer is accepted.

4. The communication terminal according to any preceding claims, wherein the controller (210) is further configured to:
display a graphical representation (510, 520, 570, 575, 576) associated with an object representing a second item available for purchase,
detect that the graphical representation for the first item is being moved on top of the graphical representation for the second item, and in response thereto display a comparison of the first and the second items listing the data associated with the first and the second item.

5. The communication terminal according to any preceding claims, wherein the controller (210) is further configured to display a search area, and if the controller (210) detects that a graphical representation is being moved to the search area, the controller is further configured to perform a search for items that are similar to the item being represented by the graphical representation being moved to the search area.

6. The communication terminal according to claim 5, wherein an item is determined to be similar if it has matching meta data with the graphical representation being moved to the search area.

7. The communication terminal according to claim 5, wherein an item is determined to be similar if it has visual properties that are similar to the graphical representation being moved to the search area.

8. The communication terminal according to any preceding claims, wherein the controller (210) is further configured to:
display a plurality of graphical representations (510, 520, 570, 575, 576) each associated with an item,
receive a filtering range indication and in response thereto order a list of items based on the received filtering range indication, and
display the whole list, wherein a current focus is moved to the first item having a property falling within the filtering range indication and wherein the current focus is presented by item(s) being highlighted.

9. The communication terminal according to claim 8, wherein filtering range is based on properties such as price, size, model or another property associated with an item.

10. The communication terminal (100, 200, 500) according to any preceding claims, wherein said display a plurality of said graphical representations (575, 576) in a scrollable list,
group said plurality of graphical representations (575, 576) into at least a first and a second group, wherein
said first group represents a higher logical or hierarchical level and
said second group represents a lower logical or hierarchical level,
wherein the plurality of graphical representations (575, 576, 675, 676) grouped in the second group are enabled to be manipulated individually and/or collectively as a group when displayed.

11. The communication terminal (100, 200, 500) according to any preceding claims, wherein the acquisition area (530) is displayed at least as long as a user is browsing for items.

12. A method for use in a communication terminal (100, 200, 500), said method comprising:
displaying a graphical representation (510, 520, 570, 575, 576) associated with an object representing an item available for purchase,
receiving a touch input indicating a selection of said graphical representation (510, 520) and in response thereto display a further graphical representation (570, 575, 576) associated with the same object,
wherein said further graphical representation (570, 575, 576) is displayed in a same page view as said graphical representation (510, 520, 570, 575, 576), thereby avoiding a further page load,
receiving a drag and drop touch input indicating a move of any of said graphical representation (510, 520) and said further graphical representation (570, 575, 576) to a displayed acquisition area (530), and
whereby the item represented by the object associated with said graphical representation and said further graphical representation (510, 520, 570, 575, 576) is selected for a purchase, and wherein the method further comprises:
determining if an object representing an item that has been moved to said acquisition area (530) is associated with a variation, wherein the variation is a variation in size and/or colour, and if it is determined that the object is associated with an variation, determine if a variation for said item has been selected for purchase, and
if it is determined that no variation has been selected for said object, displaying at least one variety image (576) as a further graphical representation (576) associated with a variation of said item represented by the object for selection of a variation,
selecting said variation of said item representing said object upon receiving an input indicating a move of said variety image (576) to said acquisition area, and wherein the selection and movement of said variation of said item effects a purchase of the associated item.

13. A computer readable storage medium encoded (32) with instructions (31) that, when executed on a processor, perform the method according to claim 12.
